# EUROPEAN PATENT SPECIFICATION

(11) **EP 4 344 533 B1**
(45) Date of publication and mention of the grant of the patent: **25.02.2026**
(21) Application number: 23199250.4
(22) Date of filing: 22.09.2023
(51) Int. Cl.: A01D 46/26

(54) **SHAKING DEVICE**
SCHÜTTELVORRICHTUNG
DISPOSITIF D'AGITATION

(30) Priority: 28.09.2022 JP 2022155290
(43) Date of publication of application: 03.04.2024
(73) Proprietor: Yamabiko Corporation, Ohme-shi, Tokyo 198-8760 (JP)
(72) Inventor: SUZUKI, Shojiro, Tokyo 198-8760 (JP)
(74) Representative: Dietz, Christopher Friedrich

(56) References cited:
- EP-A1- 2 042 020
- EP-A1- 2 625 948
- EP-B1- 1 598 571
- EP-B1- 1 627 561
- WO-A1-2022/172315
- CN-A- 103 460 904
- DE-A1- 102021 129 345

## Description

### BACKGROUND

### Technical Field

The present invention relates to a shaking device having a reciprocating pole and a contacting part, such as a hook or pusher, which is configured to engage a branch, such as an olive branch, for shaking it to drop, for example, olives.

### Background Art

EP 2 042 020 B1 discloses a shaking device having a reciprocating pole and a hook which is configured to engage a branch for shaking it to drop, for example, olives. This shaking device has a main rotation shaft, a driven shaft which is offset from the main rotation shaft and rotated in an opposite rotational direction to the main rotation shaft, a first counterweight fixed to the main rotation shaft, and a second counterweight fixed to the driven shaft. The first counterweight and the second counterweight are positioned in a backward position when the pole is in a forward position.

EP 2 625 948 B1 also discloses a shaking device having a reciprocating pole and a hook which is configured to engage a branch for shaking it to drop, for example, olives. This shaking device has a main rotation shaft with a first flywheel, a sleeve with a second flywheel rotatably disposed around the main rotation shaft and rotated in an opposite rotational direction to the main rotation shaft, a first counterweight fixed to the first flywheel, and a second counterweight fixed to the second flywheel. The first counterweight and the second counterweight are positioned in a backward position when the pole is in a forward position.

In each of these shaking devices, when the pole reaches the forward position, a shock in a direction from a backward side toward a forward side is transferred to an operator. However, since the first and second counterweights simultaneously reach their backward positions, such a shock transferred to the operator can be reduced. Similarly, when the pole reaches a backward position, a shock in a direction from the forward side toward the backward side is transferred to the operator.

However, since the first and second counterweights simultaneously reach their forward positions, such a shock transferred to the operator can be reduced.

Further, when the pole reaches an intermediate position while it moves from the forward position to the backward position, the first counterweight causes, for example, a downward force, while the second counterweight causes, for example, an upward force. Similarly, when the pole reaches the opposite intermediate position while it moves from the backward position to the forward position, the first counterweight causes, for example, an upward force, while the second counterweight causes, for example, a downward force. As a result, such downward and upward forces are at least partially cancelled so that a shock transferred to the operator caused by these upward and downward forces can be reduced.

### SUMMARY

The above shaking device including a reciprocating portion formed of a pole with a hook (for example, the device for shaking an olive branch to drop olives may also be referred to as an olive shaker) still has vibration issues during operation.

To address such vibration issues, it is considered to attach a counterweight that rotates so as to apply a centrifugal force opposite to an inertial force acting on the reciprocating portion to counteract the inertial force, as disclosed in the above-mentioned conventional techniques. However, simple rotational motion of the counterweight causes the centrifugal force to act also in a direction perpendicular to the inertial force of the reciprocating portion, thus causing vibrations in another direction.

The shaking devices disclosed in EP 2 042 020 B1 and EP 2 625 948 B1 include a counterweight rotating in a first direction and further, to counteract the perpendicular centrifugal force caused by this counterweight, a counterweight counterrotating in the first direction. As a result, such shaking devices have many components and a complicated structure. In addition, in the shaking device disclosed in EP 2 042 020 B1, the main rotation shaft and the driven shaft, each having a counterweight attached thereto, are offset from each other in a vertical direction, and a size of a case of the shaking device tends to be enlarged in the vertical direction.

In the shaking device disclosed in EP 2 625 948 B1, the main rotation shaft and the sleeve are coaxial to each other so that a size of a case of the shaking device is relatively small. On the other hand, in EP 2 625 948 B1, when the pole reaches the intermediate position, the downward and upward forces may cause, for example, a counterclockwise twisting force around an axis of the pole. Similarly, when the pole reaches the opposite intermediate position, the upward and downward forces may cause, for example, a clockwise twisting force around an axis of the pole. Namely, the counterclockwise and clockwise twisting forces are repeatedly and alternately caused. These twisting forces may be transferred to the operator via the flywheels, the main rotation shaft and the case, and give an adverse effect to an operability of the shaking device. Further, these twisting forces may give an adverse effect to a mating relationship between a beveled pinion and beveled gears in the first and second flywheels so that unstable rotations of the first and second flywheels are caused.

Then, in such shaking devices, it is considered to include a counterweight that does not make its center of gravity rotated but make its center of gravity linearly moved opposite to the reciprocating portion. It is considered that such a counterweight can counteract the inertial force acting on the reciprocating portion without causing vibrations in a direction perpendicular to the inertial force of the reciprocating portion.

Thus, it is an object of the present invention to provide an improved compact and lightweight shaking device having fewer components and a simple structure, capable of counteracting an inertial force acting on a reciprocating portion without causing vibrations in a direction perpendicular to the inertial force of the reciprocating portion.

In order to achieve the object, the present invention provides a shaking device according to claim 1, including: a crankshaft unit driven by a driving source; a connecting rod; and a reciprocating portion having a contacting part, the reciprocating portion being reciprocated between a forward position and a backward position along a reciprocating axis by the crankshaft unit via the connecting rod. The crankshaft unit includes a crankshaft portion engaging the connecting rod, and a reverse-rotation portion. The crankshaft portion includes a normal-rotation member driven by the driving source to rotate around a first rotation axis in a first rotational direction. The reverse-rotation portion includes a reverse-rotation gear having a counterweight attached thereto, the reverse-rotation gear being configured to mesh with an internal gear fixed to a case and to be driven so as to revolve around the first rotation axis in the first rotational direction together with the normal-rotation member and spin around a second rotation axis offset from the first rotation axis in a second rotational direction opposite to the first rotational direction. The counterweight and the reverse-rotation gear perform rotational motion, revolution around the first rotation axis and spinning around the second rotation axis, whereby a center of gravity of the reverse-rotation portion including the counterweight and the reverse-rotation gear is reciprocated along the same reciprocating axis as the reciprocating portion.

In one aspect, a reference pitch circle diameter of the reverse-rotation gear is set to half of a reference pitch circle diameter of the internal gear.

In another preferred aspect, a position of a center of gravity of the reverse-rotation portion including the counterweight and the reverse-rotation gear is disposed on a reference pitch circle of the reverse-rotation gear.

In a further preferred aspect, a connection axis between the normal-rotation member and the connecting rod and the second rotation axis are provided on opposite sides with respect to the first rotation axis.

In still another preferred aspect, the counterweight is disposed nearer to the reciprocating axis than the reverse-rotation gear.

In yet another preferred aspect, when the reciprocating portion is in the forward position, a center of gravity of the reverse-rotation portion including the counterweight and the reverse-rotation gear is positioned in a backward position, and when the reciprocating portion is in the backward position, a center of gravity of the reverse-rotation portion including the counterweight and the reverse-rotation gear is positioned in a forward position.

According to the present invention, since a center of gravity of the reverse-rotation portion including the counterweight and the reverse-rotation gear is reciprocated (linearly moved) along the same reciprocating axis as the reciprocating portion, not making its center of gravity rotated, it is possible to provide an improved compact and lightweight shaking device having fewer components and a simple structure, capable of counteracting the inertial force acting on the reciprocating portion without causing vibrations in a direction perpendicular to the inertial force of the reciprocating portion.

### BRIEF DESCRIPTION OF THE DRAWINGS

The invention is explained below with reference to the embodiments shown in the figures, without limiting the invention.
- Fig. 1: is a schematic front view of a shaking device according to an embodiment of the present invention.
- Fig. 2: is a partial perspective view of the shaking device of Fig. 1 wherein a case is omitted.
- Fig. 3: is a partial cross-sectional bottom view of the shaking device of Fig. 1.
- Fig. 4A: is a partial front view of a crankshaft unit of the shaking device of Fig. 1 when a connecting rod is in a forward position (beveled gear: 0°).
- Fig. 4B: is a partial front view of the crankshaft unit of the shaking device of Fig. 1 when the connecting rod is in an intermediate position (beveled gear: 45°).
- Fig. 4C: is a partial front view of the crankshaft unit of the shaking device of Fig. 1 when the connecting rod is in an intermediate position (beveled gear: 90°).
- Fig. 4D: is a partial front view of the crankshaft unit of the shaking device of Fig. 1 when the connecting rod is in an intermediate position (beveled gear: 135°).
- Fig. 4E: is a partial front view of the crankshaft unit of the shaking device of Fig. 1 when the connecting rod is in a backward position (beveled gear: 180°).

### DETAILED DESCRIPTION

Referring to the drawings, a shaking device according to an exemplary embodiment of the present invention will be described.

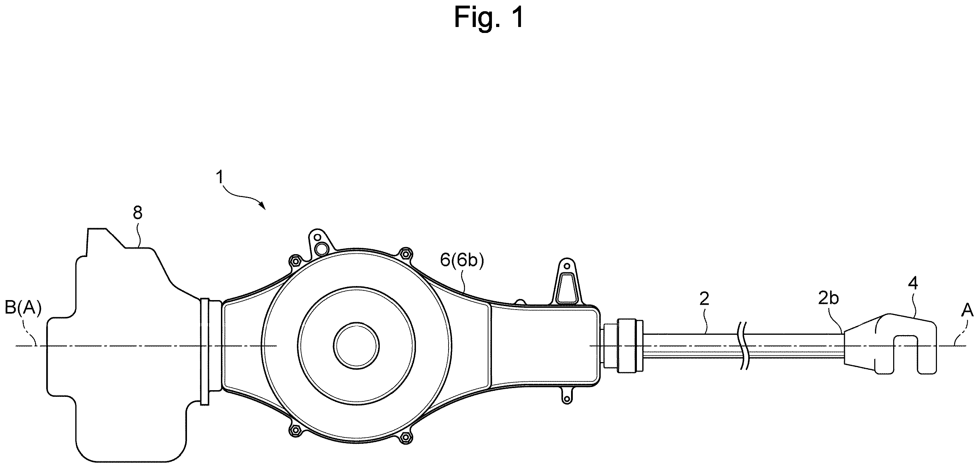

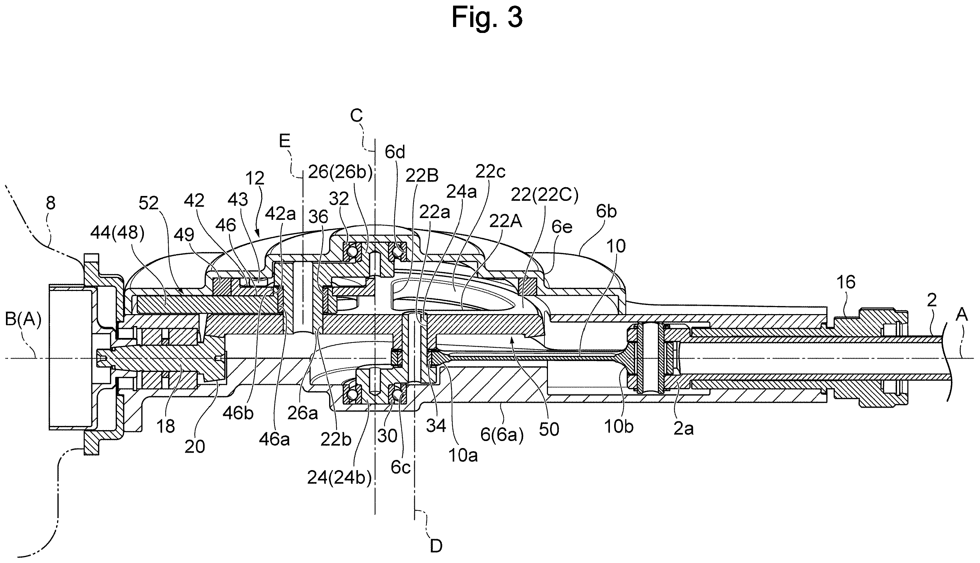

As shown in Fig. 1, a shaking device 1 includes a pole 2, a case 6 that houses a proximal end of the pole 2, and an engine 8 attached to the case 6. The pole 2 has a contacting part 4, such as a hook or a pusher at a forward end 2b of the pole 2 and is linearly reciprocated along a reciprocating axis A with respect to the case 6. The contacting part 4 is configured to engage a branch, such as an olive branch, for shaking it to drop, for example, olives. The case 6 has a two-split structure flattened as a whole, including a first sidewall 6a (Fig. 3) disposed on a first side (i.e., a back side not visible in Fig. 1) of the reciprocating axis A and a second sidewall 6b disposed on a second side (i.e., a front side visible in Fig. 1) of the reciprocating axis A opposite to the first side.

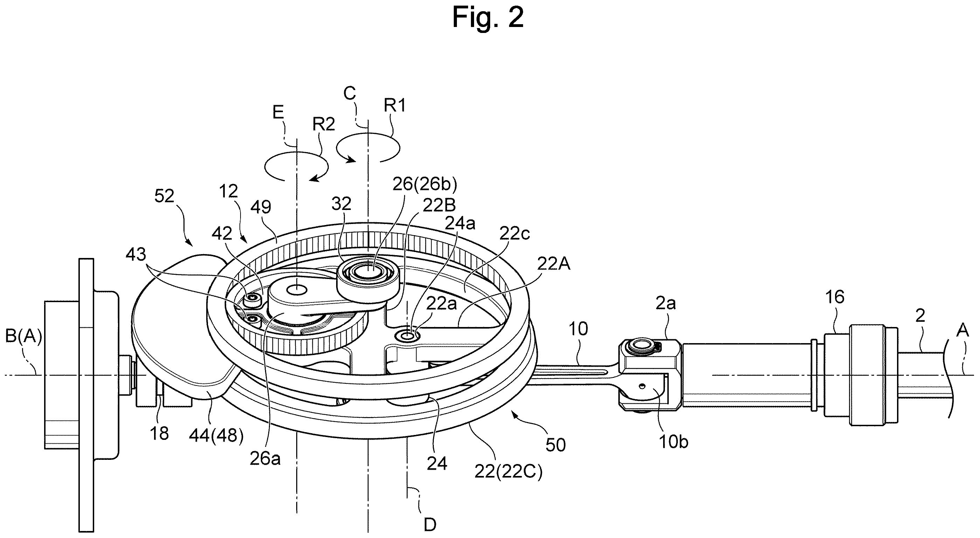

As shown in Fig. 2 and Fig. 3, the shaking device 1 also includes a driving shaft 18 which is driven by the engine 8 and has a beveled pinion (hereinafter this may be simply referred to as a pinion) 20, a crankshaft unit 12 driven by the pinion 20, and a connecting rod 10. The pole 2 is driven by the pinion 20 via the crankshaft unit 12 and the connecting rod 10. The driving shaft 18, the crankshaft unit 12, and the connecting rod 10 are housed in the case 6. The driving shaft 18 extends along a driving axis B which is preferably aligned with the reciprocating axis A.

Referring to Fig. 3, the engine 8 is preferably an internal combustion engine, but it may be an electrical or pneumatic engine. The driving shaft 18 is connected to an output shaft (not shown) of the engine 8 via, for example, a centrifugal clutch (not shown). Thus, the driving shaft 18 is configured to be rotated by the engine 8 around the driving axis B.

As shown in Fig. 2 and Fig. 3, the crankshaft unit 12 includes a crankshaft portion 50 engaging the connecting rod 10, and a reverse-rotation portion 52 described later. The crankshaft portion 50 includes a beveled gear 22 as a normal-rotation gear (normal-rotation member) driven by the pinion 20, a first crankshaft 24, and a second crankshaft 26.

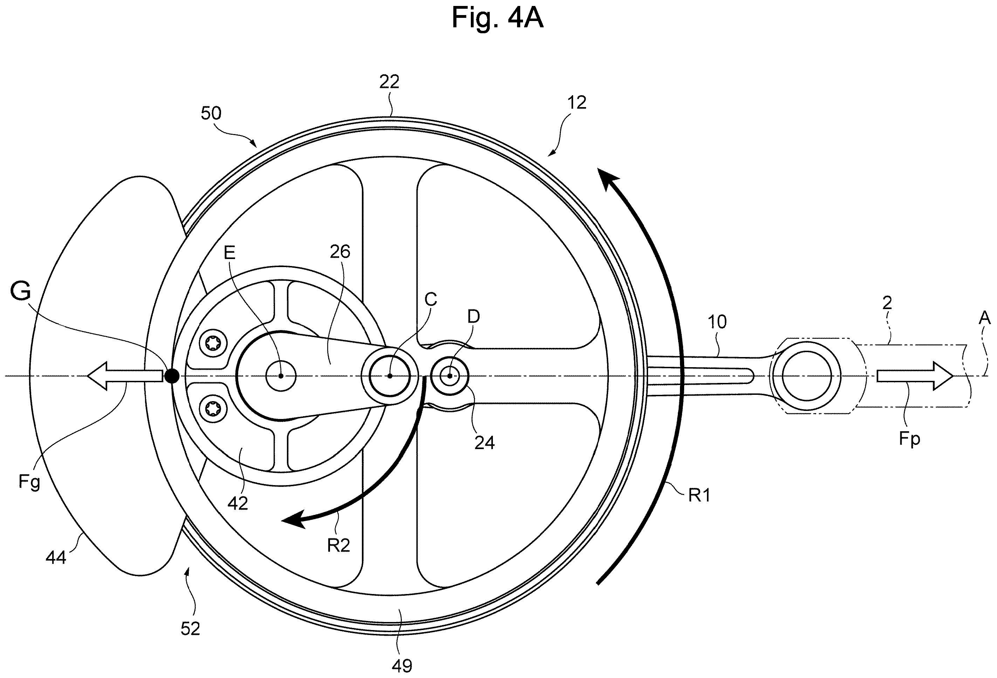

The beveled gear 22 is configured to mesh with the pinion 20 at the end of the driving shaft 18 that transfers the rotation of the engine 8 and decelerate the rotation of the driving shaft 18. The beveled gear 22 is configured to be driven by the pinion 20 to rotate (spin) around the rotation axis C in a first or normal rotational direction R1 (see Fig. 4A to Fig. 4E). The beveled gear 22 includes a first aperture 22a into which the first crankshaft 24 (or a first crankpin 24a thereof) is press-fitted from a side of the beveled gear 22 facing the reciprocating axis A of the pole 2, a second aperture 22b into which the second crankshaft 26 (or a second crankpin 26a thereof) is press-fitted from a side of the beveled gear 22 opposite to the side facing the reciprocating axis A of the pole 2, and a plurality of holes 22c (four holes in a substantially fan-shape in the illustrated example) arranged in a peripheral direction. The first aperture 22a and the second aperture 22b are offset from the rotation axis C and disposed on the opposite sides with respect to the rotation axis C. That is, the phase of the first crankshaft 24 (or the first crankpin 24a thereof) press-fitted into the first aperture 22a and the phase of the second crankshaft 26 (or the second crankpin 26a thereof) press-fitted into the second aperture 22b are displaced by 180°. In other words, the beveled gear 22 includes an annular ring portion 22C, in which a gear meshing with the pinion 20 is formed on the side of the beveled gear 22 facing the reciprocating axis A of the pole 2, and a first bridge portion 22A and a second bridge portion 22B, which cross each other at the center (on the rotation axis C) of the beveled gear 22. One of the first bridge portion 22A or the second bridge portion 22B (the first bridge portion 22A in the illustrated example) has the first aperture 22a and the second aperture 22b (on the opposite sides) with the rotation axis C interposed therebetween, which are offset from the rotation axis C. The (four) spaces between the first bridge portion 22A and the second bridge portion 22B form the substantially fan-shaped holes 22c.

The beveled gear 22 is disposed (housed) in a space sealed by the first sidewall 6a and the second sidewall 6b. The first crankpin 24a of the first crankshaft 24 press-fitted into the first aperture 22a extends from the beveled gear 22 (or the first aperture 22a thereof) toward the first sidewall 6a along an offset axis D (which is in parallel with and offset from the rotation axis C). The first main shaft 24b of the first crankshaft 24 extends from the first crankpin 24a toward the first sidewall 6a along the rotation axis C, and is rotatably supported around the rotation axis C by a first bearing 30 attached to the first sidewall 6a (a recess 6c thereof). The second crankpin 26a of the second crankshaft 26 press-fitted into the second aperture 22b extends from the beveled gear 22 (or the second aperture 22b thereof) toward the second sidewall 6b along an offset axis E (which is in parallel with and offset from the rotation axis C). The second main shaft 26b of the second crankshaft 26 extends from the second crankpin 26a toward the second sidewall 6b along the rotation axis C, and is rotatably supported around the rotation axis C by a second bearing 32 attached to the second sidewall 6b (a recess 6d thereof). Thus, the crankshaft portion 50 is configured to be rotated around the rotation axis C in the rotational direction R1.

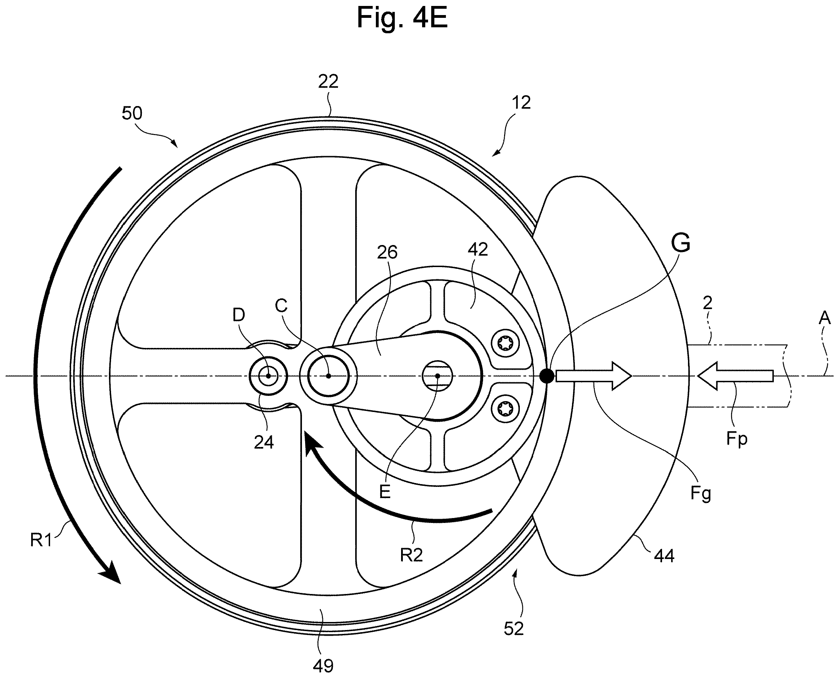

As shown in Fig. 3, the connecting rod 10 has a backward end 10a pivotally attached to the first crankpin 24a of the first crankshaft 24 via a first needle bearing 34, and a forward end 10b pivotally attached to a backward end 2a of the pole 2. The pole 2 is configured to be guided by a pole guide 16 fixed to the case 6 to linearly move the pole 2 along the reciprocating axis A. The pole 2 is configured to be reciprocated between a most-extended or forward position shown in Fig. 4A and a most-retracted or backward position shown in Fig. 4E.

As shown in Fig. 2 and Fig. 3, the reverse-rotation portion 52 of the crankshaft unit 12 includes a reverse-rotation gear (this may be simply referred to as a gear) 42, and a counterweight 44 attached to the gear 42. The counterweight 44 is disposed adjacent to the beveled gear 22 (a face of the beveled gear 22 opposite to the side facing the reciprocating axis A). The counterweight 44 is flattened and includes an attachment portion 46 and a weight portion 48 in, for example, a fan-shape. The attachment portion 46 of the counterweight 44 has an aperture 46a into which the second crankpin 26a of the second crankshaft 26 is rotatably inserted via the second needle bearing 36. In other words, the counterweight 44 includes the attachment portion 46 pivotally attached to the second crankpin 26a of the second crankshaft 26 via the second needle bearing 36, and the weight portion 48 integrally formed with the attachment portion 46.

The gear 42 has a central aperture 42a, into which a tubular portion 46b of the attachment portion 46 of the counterweight 44 is inserted, the tubular portion 46b projecting from the face of the aperture 46a of the attachment portion 46 of the counterweight 44 opposite to the side facing the reciprocating axis A. The gear 42 is attached to the counterweight 44 (a face of the counterweight 44 opposite to the side facing the reciprocating axis A) by two bolts 43 so as to be integrally operable. Note that the method of fixing the gear 42 and the counterweight 44 is not limited to fixing by bolts. In addition, the gear 42 and the counterweight 44 may be integrally formed. The gear 42 is configured to mesh with an internal gear 49 fixed to the case 6 (or a step portion 6e thereof). In the illustrated example, the diameter of the internal gear 49 is set substantially equal to that of the beveled gear 22.

Thus, when the crankshaft portion 50 is driven by the pinion 20 to rotate around the rotation axis C in the rotational direction R1, the reverse-rotation portion 52 is configured to be rotated (revolve) around the rotation axis C in a first or normal rotational direction R1 together (collectively) with the crankshaft portion 50, and to be rotated (spin) around the offset axis (rotation axis) E in a second or reverse rotational direction R2 (opposite to the first or normal rotational direction R1) by the mesh between the gear 42 and the internal gear 49.

In the present embodiment, as described above, the phase of the first crankshaft 24 (or the first crankpin 24a thereof) and the phase of the second crankshaft 26 (or the second crankpin 26a thereof) are displaced by 180° around the rotation axis C. In other words, a connection axis (offset axis D) between the beveled gear 22 and the connecting rod 10 and the offset axis (rotation axis) E are provided on the opposite sides with respect to the rotation axis C (the phases are displaced by 180°). The position of the center of gravity of the reverse-rotation portion 52 including the counterweight 44 and the gear 42 is adjusted to be on the reference pitch circle of the gear 42 (see Fig. 4A to Fig. 4E). The reference pitch circle diameter (the number of teeth) of the gear 42 is set to half of the reference pitch circle diameter (the number of teeth) of the internal gear 49.

Thus, when the pole 2 is in the forward position, the center of gravity of the reverse-rotation portion 52 including the counterweight 44 and the gear 42 is positioned in a backward position (on the reciprocating axis A) as shown in Fig. 4A, whereas when the pole 2 is in the backward position, the center of gravity of the reverse-rotation portion 52 including the counterweight 44 and the gear 42 is positioned in a forward position (on the reciprocating axis A) as shown in Fig. 4E. In this manner, the center of gravity of the reverse-rotation portion 52 is positioned contrary to the movement of the pole 2, so that the vibrations caused in the forward and backward directions and transferred to the operator are mitigated. In addition, as shown in Fig. 4A to Fig. 4E, when the pole 2 is in an intermediate position on the way from the forward position to the backward position, the center of gravity of the reverse-rotation portion 52 moves in a direction opposite to the moving direction of the pole 2 on the same reciprocating axis A as the pole 2 being the reciprocating portion. In addition, the center of gravity of the reverse-rotation portion 52 is disposed to linearly reciprocate on the reciprocating axis A as a whole. The counterweight 44 having such a configuration will not cause the perpendicular centrifugal force produced by rotation as in the conventional counterweight.

In addition, the reverse-rotation portion 52 can be configured using only a single counterweight 44. This is because while the rotating counterweight as in the conventional structure requires a counterrotating counterweight to counteract the centrifugal force of the rotating counterweight, the counterweight 44 of the present embodiment does not cause a centrifugal force. Thus, it is possible to reduce the thickness of the case 6 in a direction along the rotation axis C. In addition, since the counterweight 44 of the reverse-rotation portion 52 is disposed nearer to the reciprocating axis A (in the direction along the rotation axis C) than the gear 42 and the distance between the reciprocating axis A and the counterweight 44 is small, it is possible to significantly reduce the twisting force caused by the counterweight 44 with respect to the reciprocating axis A as compared to the conventional configuration of rotating the counterweight around the flywheel shaft.

Referring to Fig. 4A to Fig. 4E, an operation of the shaking device 1 will be described.

The driving shaft 18 is rotated by the engine 8 via the output shaft (not shown) of the engine 8 and the centrifugal clutch (nor shown). The beveled gear 22 is rotated by the pinion 20 around the rotation axis C in the first rotational direction R1. The direction of the rotation axis C is a left-to-right direction when the direction in which an operator usually faces a working part is set as the front.

The first crankshaft 24 is rotated together with the beveled gear 22 so that the pole 2 is linearly reciprocated along the reciprocating axis A via the connecting rod 10. The reciprocating action of the pole 2 allows the contacting part 4 vibrating in the direction along the reciprocating axis A to drop, for example, olives.

The second crankshaft 26 is rotated together with the beveled gear 22, and the reverse-rotation portion 52 is rotated (revolves) together with the beveled gear 22 around the rotation axis C in the first rotational direction R1. Meanwhile, since the gear 42 of the reverse-rotation portion 52 meshes with the internal gear 49 fixed to the case 6, the reverse-rotation portion 52 is rotated (spins) around the offset axis (rotation axis) E in the second rotational direction R2 opposite to the first rotational direction R1.

As shown in Fig. 4A, when the pole 2 moves toward the forward position, a shock (inertial force Fp) in a direction from a backward side toward a forward side is generated. However, since the center of gravity G of the reverse-rotation portion 52 simultaneously reaches the backward position, and the inertial force Fg in a direction from a forward side toward a backward side is generated in the reverse-rotation portion 52, the above-described shock transferred to the operator can be reduced.

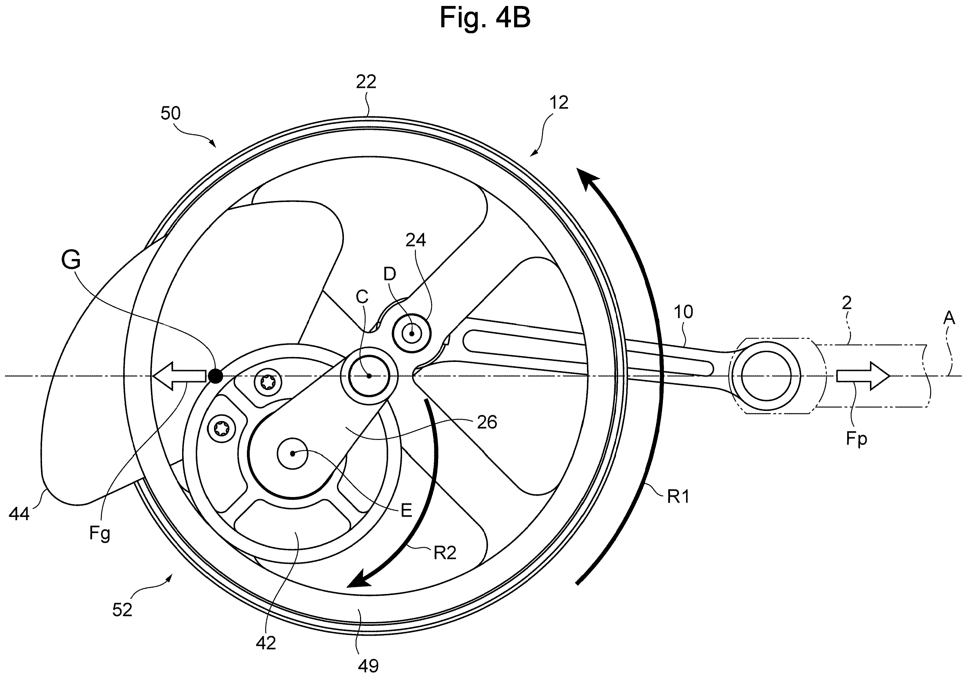

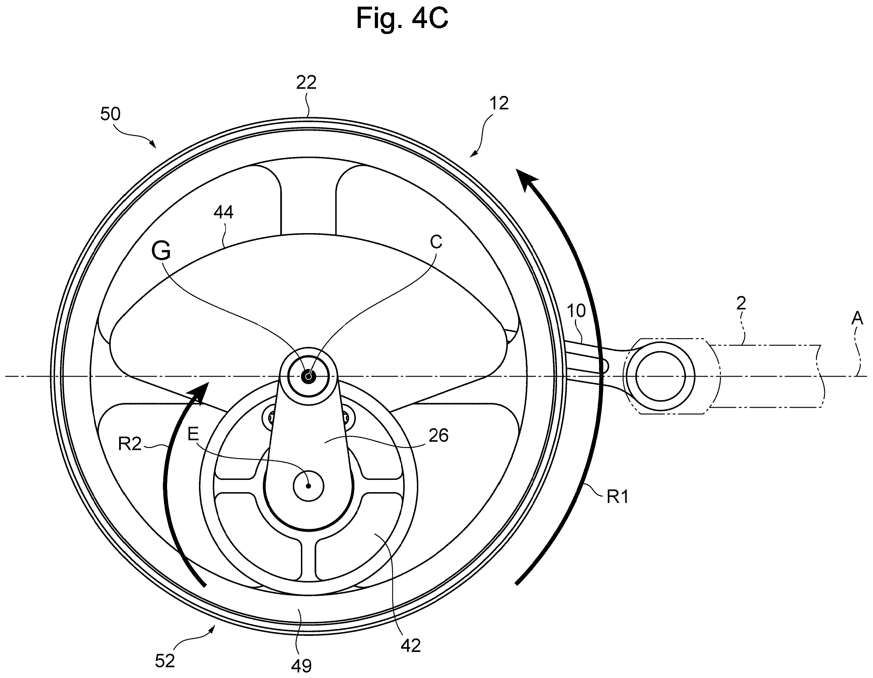

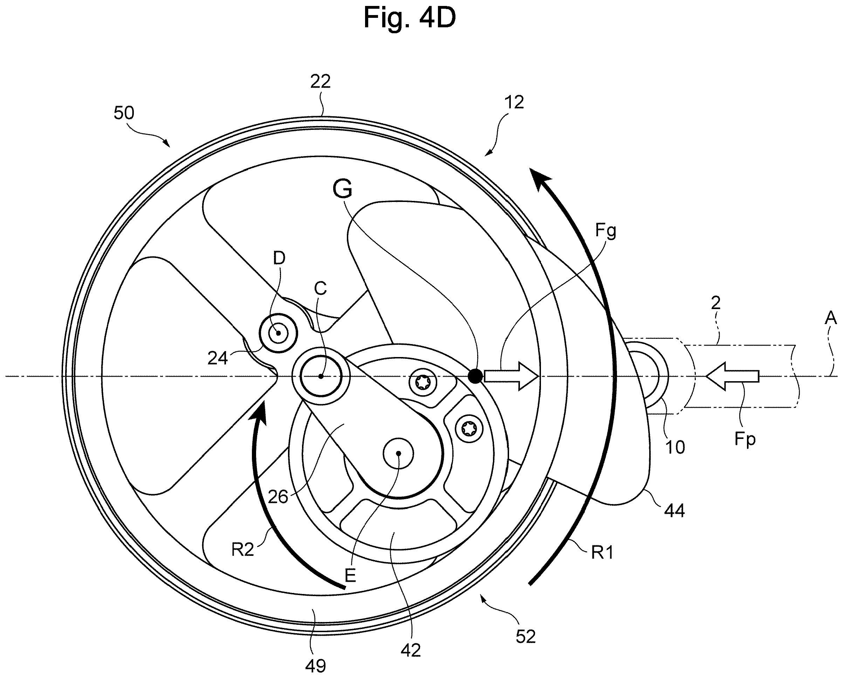

As shown in Fig. 4B, Fig. 4C, Fig. 4D, when the pole 2 reaches the intermediate position while it moves from the forward position to the backward position, as described above, the reverse-rotation portion 52 performs two types of rotational motion, i.e., revolution around the rotation axis C in the first rotational direction R1 and spinning around the offset axis (rotation axis) E in the second rotational direction R2, whereby the center of gravity G of the reverse-rotation portion 52 is reciprocated opposite to the pole 2 (reciprocating portion) on the same reciprocating axis A as the pole 2 (reciprocating portion), and does not accompany upward and downward components. As a result, a force (shock) in a direction perpendicular to the reciprocating axis A (upward and downward directions with respect to the operator) will not be generated.

As shown in Fig. 4E, when the pole 2 moves toward the backward position, a shock (inertial force Fp) in a direction from a forward side toward a backward side is generated. However, since the center of gravity G of the reverse-rotation portion 52 simultaneously reaches the forward position, and the inertial force Fg in a direction from a backward side toward a forward side is generated in the reverse-rotation portion 52, the above-described shock transferred to the operator can be reduced.

Similarly, though not shown in the drawings, when the pole 2 reaches the intermediate position while it moves from the backward position to the forward position, the center of gravity G of the reverse-rotation portion 52 is reciprocated opposite to the pole 2 (reciprocating portion) on the same reciprocating axis A as the pole 2 (reciprocating portion), and does not accompany upward and downward components. As a result, a force (shock) in a direction perpendicular to the reciprocating axis A (upward and downward directions with respect to the operator) will not be generated.

As described above, the shaking device 1 of the present embodiment includes a crankshaft unit 12 driven by a driving source (engine 8); a connecting rod 10; and a reciprocating portion (pole 2) having a contacting part 4, the reciprocating portion (pole 2) being reciprocated between a forward position and a backward position along a reciprocating axis A by the crankshaft unit 12 via the connecting rod 10. The crankshaft unit 12 includes a crankshaft portion 50 engaging the connecting rod 10, and a reverse-rotation portion 52. The crankshaft portion 50 includes a normal-rotation member (beveled gear 22) driven by the driving source (engine 8) to rotate (spin) around a first rotation axis C in a first rotational direction R1. The reverse-rotation portion 52 includes a reverse-rotation gear 42 having a counterweight 44 attached thereto, the reverse-rotation gear 42 being configured to mesh with an internal gear 49 fixed to a case 6 and to be driven so as to revolve around the first rotation axis C in the first rotational direction R1 together (collectively) with the normal-rotation member (beveled gear 22) and spin around a second rotation axis E offset (in parallel) from the first rotation axis C in a second rotational direction R2 opposite to the first rotational direction R1. The counterweight 44 and the reverse-rotation gear 42 perform (two types of) rotational motion, revolution around the first rotation axis C and spinning around the second rotation axis E, whereby a center of gravity of the reverse-rotation portion 52 including the counterweight 44 and the reverse-rotation gear 42 is reciprocated along the same reciprocating axis A as the reciprocating portion (pole 2).

In addition, a reference pitch circle diameter (the number of teeth) of the reverse-rotation gear 42 is set to half of a reference pitch circle diameter (the number of teeth) of the internal gear 49. According to this configuration, since the reverse-rotation gear 42 makes one rotation during a half rotation of the beveled gear 22, it is possible to direct the counterweight 44 outward at a timing when the reverse-rotation gear 42 reaches a forward position and a backward position, thus making full use of the inertial force acting on the counterweight 44.

In addition, preferably, a position of a center of gravity of the reverse-rotation portion 52 including the counterweight 44 and the reverse-rotation gear 42 is disposed on a reference pitch circle of the reverse-rotation gear 42. According to this configuration, it is possible to match the position of the center of gravity of the reverse-rotation portion 52 during reciprocating with the reciprocating axis A, thus minimizing the component of the vertical vibrations. However, even if the component of the vertical vibrations is generated due to displacement of the center of gravity of the reverse-rotation portion 52 during reciprocating from the position on the reciprocating axis A, a force perpendicular to the reciprocating axis A can be reduced since the stroke perpendicular to the reciprocating axis A is sufficiently smaller than the stroke in the direction along the reciprocating axis A, as compared to the conventional configuration of rotating the counterweight around the flywheel shaft.

In addition, preferably, a connection axis between the normal-rotation member (beveled gear 22) and the connecting rod 10 and the second rotation axis E are provided on opposite sides with respect to the first rotation axis C. According to this configuration, the reciprocating portion (pole 2) and the counterweight 44 move toward the opposite directions, and thus it is possible to counteract the inertial force acting on the reciprocating portion (pole 2) by the inertial force of the counterweight 44. In addition, by disposing the first crankpin 24a and the second crankpin 26a on the opposite sides with respect to the rotation axis C, the position of the center of gravity of the crankshaft unit 12 comes closer to the rotation axis C, and it is possible to reduce an excess centrifugal force caused around the rotation axis C during operation.

In addition, preferably, the counterweight 44 is disposed nearer to the reciprocating axis A (or the beveled gear 22) than the reverse-rotation gear 42. According to this configuration, the position of the center of gravity of the reverse-rotation portion 52 comes closer to the reciprocating axis A of the reciprocating portion (pole 2), and thus it is possible to reduce the twisting force caused by the counterweight 44 with respect to the reciprocating axis A.

In addition, when the reciprocating portion (pole 2) is in the forward position, a center of gravity of the reverse-rotation portion 52 including the counterweight 44 and the reverse-rotation gear 42 is positioned in a backward position, and when the reciprocating portion (pole 2) is in the backward position, a center of gravity of the reverse-rotation portion 52 including the counterweight 44 and the reverse-rotation gear 42 is positioned in a forward position. When the reciprocating portion (pole 2) moves between the forward position and the backward position, the center of gravity of the reverse-rotation portion 52 moves along the reciprocating axis A between the backward position and the forward position in a direction opposite to the moving direction of the reciprocating portion (pole 2).

According to the present embodiment, since a center of gravity of the reverse-rotation portion 52 including the counterweight 44 and the reverse-rotation gear 42 is reciprocated (linearly moved) along the same reciprocating axis A as the reciprocating portion (pole 2), not making its center of gravity rotated, it is possible to provide an improved compact and lightweight shaking device 1 having fewer components and a simple structure, capable of counteracting the inertial force acting on the reciprocating portion without causing vibrations in a direction perpendicular to the inertial force of the reciprocating portion.

It should be noted that although the engine 8 is used as a driving source in the above-described embodiment, a motor may be used. In addition, although the beveled gear 22 is rotated and driven by the pinion 20 around the rotation axis C in the first rotational direction R1 in the above-described embodiment, for a normal-rotation member rotating around the rotation axis C in the first rotational direction R1, any member other than the beveled gear 22 may be used. For example, instead of rotating the driving shaft 18, the normal-rotation member may be rotated by a structure in which a motor is coupled to the first main shaft 24b of the first crankshaft 24 or the second main shaft 26b of the second crankshaft 26.

Although the exemplary embodiment of the present invention has been described above, the present invention is not limited to the above embodiment, and can be changed appropriately without departing from the claims.

### LIST OF REFERENCE SIGNS

- 1: Shaking device
- 2: Pole (reciprocating portion)
- 2a: Backward end
- 2b: Forward end
- 4: Contacting part
- 6: Case
- 6a: First sidewall
- 6b: Second sidewall
- 8: Engine (driving source)
- 10: Connecting rod
- 10a: Backward end
- 10b: Forward end
- 12: Crankshaft unit
- 16: Pole guide
- 18: Driving shaft
- 20: Beveled pinion
- 22: Beveled gear (normal-rotation member)
- 22a: First aperture
- 22b: Second aperture
- 22c: Hole
- 22A: First bridge portion
- 22B: Second bridge portion
- 22C: Annular ring portion
- 24: First crankshaft
- 24a: First crankpin
- 24b: First main shaft
- 26: Second crankshaft
- 26a: Second crankpin
- 26b: Second main shaft
- 30: First bearing
- 32: Second bearing
- 34: First needle bearing
- 36: Second needle bearing
- 42: Reverse-rotation gear
- 42a: Central aperture
- 43: Bolt
- 44: Counterweight
- 46: Attachment portion
- 46a: Aperture
- 46b: Tubular portion
- 48: Weight portion
- 49: Internal gear
- 50: Crankshaft portion
- 52: Reverse-rotation portion
- A: Reciprocating axis
- B: Driving axis
- C: Rotation axis (first rotation axis)
- D: Offset axis
- E: Offset axis (second rotation axis)
- R1: First rotational direction
- R2: Second rotational direction

## Claims

1. A shaking device (1), comprising:
a crankshaft unit (12) driven by a driving source (8);
a connecting rod (10); and
a reciprocating portion (2) having a contacting part (4), the reciprocating portion (2) being reciprocated between a forward position and a backward position along a reciprocating axis (A) by the crankshaft unit (12) via the connecting rod (10),
wherein the crankshaft unit (12) includes a crankshaft portion (50) engaging the connecting rod (10), and a reverse-rotation portion (52);
wherein the crankshaft portion (50) includes a normal-rotation member (22) driven by the driving source (8) to rotate around a first rotation axis (C) in a first rotational direction (R1);
wherein the reverse-rotation portion (52) includes a reverse-rotation gear (42) having a counterweight (44) attached thereto, the reverse-rotation gear (42) being configured to mesh with an internal gear (49) fixed to a case (6) and to be driven so as to revolve around the first rotation axis (C) in the first rotational direction (R1) together with the normal-rotation member (22) and spin around a second rotation axis (E) offset from the first rotation axis (C) in a second rotational direction (R2) opposite to the first rotational direction (R1);
**characterized in that** the counterweight (44) and the reverse-rotation gear (42) perform rotational motion, revolution around the first rotation axis (C) and spinning around the second rotation axis (E), whereby a center of gravity of the reverse-rotation portion (52) including the counterweight (44) and the reverse-rotation gear (42) is reciprocated along the same reciprocating axis (A) as the reciprocating portion (2).

2. The shaking device (1) according to claim 1, wherein a reference pitch circle diameter of the reverse-rotation gear (42) is set to half of a reference pitch circle diameter of the internal gear (49).

3. The shaking device (1) according to claim 1 or 2, wherein a position of a center of gravity of the reverse-rotation portion (52) including the counterweight (44) and the reverse-rotation gear (42) is disposed on a reference pitch circle of the reverse-rotation gear (42).

4. The shaking device (1) according to claim 1 or 2, wherein a connection axis between the normal-rotation member (22) and the connecting rod (10) and the second rotation axis (E) are provided on opposite sides with respect to the first rotation axis (C).

5. The shaking device (1) according to claim 1 or 2, wherein the counterweight (44) is disposed nearer to the reciprocating axis (A) than the reverse-rotation gear (42).

6. The shaking device (1) according to claim 1 or 2, wherein when the reciprocating portion (2) is in the forward position, a center of gravity of the reverse-rotation portion (52) including the counterweight (44) and the reverse-rotation gear (42) is positioned in a backward position, and when the reciprocating portion (2) is in the backward position, a center of gravity of the reverse-rotation portion (52) including the counterweight (44) and the reverse-rotation gear (42) is positioned in a forward position.

## Patentansprüche

1. Schüttelvorrichtung (1), aufweisend:
eine Kurbelwelleneinheit (12), die von einer Antriebsquelle (8) angetrieben wird;
eine Verbindungsstange (10); und
einen Hubabschnitt (2) mit einem Kontaktteil (4), wobei der Hubabschnitt (2) mittels der Kurbelwelleneinheit (12) durch die Verbindungsstange (10) entlang einer Hubachse (A) zwischen einer vorderen Stellung und einer hinteren Stellung hin- und herbewegt wird,
wobei die Kurbelwelleneinheit (12) einen Kurbelwellenabschnitt (50), der mit der Verbindungsstange (10) in Eingriff steht, und einen Gegendrehungsabschnitt (52) umfasst;
wobei der Kurbelwellenabschnitt (50) ein Normaldrehungselement (22) umfasst, das von der Antriebsquelle (8) angetrieben wird, um sich um eine erste Drehachse (C) in einer ersten Drehrichtung (Rl) zu drehen;
wobei der Gegendrehungsabschnitt (52) ein Gegendrehungszahnrad (42) mit einem daran befestigten Gegengewicht (44) umfasst, wobei das Gegendrehungszahnrad (42) dazu ausgebildet ist, mit einem an einem Gehäuse befestigten Innenzahnrad (49) in Eingriff zu stehen (6), und so angetrieben zu werden, dass es sich zusammen mit dem Normaldrehungselement (22) um die erste Drehachse (C) in der ersten Drehrichtung (R1) dreht und sich um eine zweite Drehachse (E), die gegenüber der ersten Drehachse (C) versetzt ist, in einer zweiten Drehrichtung (R2) dreht, die der ersten Drehrichtung (R1) entgegengesetzt ist;
**dadurch gekennzeichnet, dass** das Gegengewicht (44) und das Gegendrehungszahnrad (42) eine Drehbewegung, eine Drehung um die erste Drehachse (C) und eine Drehung um die zweite Drehachse (E) ausführen, wodurch ein Schwerpunkt des Gegendrehungsabschnitts (52) einschließlich des Gegengewichts (44) und des Gegendrehungszahnrads (42) entlang derselben Hubachse (A) wie der Hubabschnitt (2) hin- und herbewegt wird.

2. Schüttelvorrichtung (1) nach Anspruch 1, wobei ein Referenzteilkreisdurchmesser des Gegendrehungszahnrad (42) auf die Hälfte eines Referenzteilkreisdurchmessers des Innenzahnrads (49) eingestellt ist.

3. Schüttelvorrichtung (1) nach Anspruch 1 oder 2, wobei eine Position eines Schwerpunkts des Gegendrehungsabschnitts (52) einschließlich des Gegengewichts (44) und des Gegendrehungszahnrads (42) auf einem Referenzteilkreisdurchmesser des Gegendrehungszahnrad (42) angeordnet ist.

4. Schüttelvorrichtung (1) nach Anspruch 1 oder 2, wobei eine Verbindungsachse zwischen dem Normaldrehungselement (22) und der Verbindungsstange (10) und die zweite Drehachse (E) auf gegenüberliegenden Seiten in Bezug auf die erste Drehachse (C) bereitgestellt sind.

5. Schüttelvorrichtung (1) nach Anspruch 1 oder 2, wobei das Gegengewicht (44) näher an der Hubachse (A) angeordnet ist als das Gegendrehungszahnrad (42).

6. Schüttelvorrichtung (1) nach Anspruch 1 oder 2, wobei ein Schwerpunkt des Gegendrehungsabschnitts (52) einschließlich des Gegengewichts (44) und des Gegendrehungszahnrads (42) in einer hinteren Stellung positioniert ist, wenn sich der Hubabschnitt (2) in der vorderen Stellung befindet, und der Schwerpunkt des Gegendrehungsabschnitts (52) einschließlich des Gegengewichts (44) und des Gegendrehungszahnrads (42) in einer vorderen Stellung positioniert ist, wenn sich der Hubabschnitt (2) in der hinteren Stellung befindet.

## Revendications

1. Dispositif d'agitation (1), comprenant :
une unité de vilebrequin (12) entraînée par une source d'entraînement (8) ;
une bielle (10) ; et
une partie à mouvement alternatif (2) ayant une partie de contact (4), la partie à mouvement alternatif (2) étant animée d'un mouvement alternatif entre une position avant et une position arrière le long d'un axe de mouvement alternatif (A) par l'unité de vilebrequin (12) via la bielle (10),
dans lequel l'unité de vilebrequin (12) comprend une partie de vilebrequin (50) s'engageant avec la bielle (10), et une partie à rotation inverse (52) ;
dans lequel la partie de vilebrequin (50) comprend un élément à rotation normale (22) entraîné par la source d'entraînement (8) pour tourner autour d'un premier axe de rotation (C) dans une première direction de rotation (R1) ;
dans lequel la partie à rotation inverse (52) comprend un engrenage à rotation inverse (42) auquel est attaché un contrepoids (44), l'engrenage à rotation inverse (42) étant configuré pour s'engrener avec un engrenage interne (49) fixé à un boîtier (6) et pour être entraîné de manière à effectuer une révolution autour du premier axe de rotation (C) dans la première direction de rotation (R1) conjointement avec l'élément à rotation normale (22) et à pivoter autour d'un second axe de rotation (E) décalé par rapport au premier axe de rotation (C) dans une seconde direction de rotation (R2) opposée à la première direction de rotation (R1) ;
**caractérisé en ce que** le contrepoids (44) et l'engrenage à rotation inverse (42) effectuent un mouvement de rotation, une révolution autour du premier axe de rotation (C) et un pivotement autour du second axe de rotation (E), moyennant quoi le centre de gravité de la partie à rotation inverse (52) comprenant le contrepoids (44) et l'engrenage à rotation inverse (42) est animé d'un mouvement alternatif le long du même axe de mouvement alternatif (A) que la partie à mouvement alternatif (2).

2. Dispositif d'agitation (1) selon la revendication 1, dans lequel un diamètre de cercle primitif de référence de l'engrenage à rotation inverse (42) est défini à la moitié d'un diamètre de cercle primitif de référence de l'engrenage interne (49).

3. Dispositif d'agitation (1) selon la revendication 1 ou 2, dans lequel une position du centre de gravité de la partie à rotation inverse (52) comprenant le contrepoids (44) et l'engrenage à rotation inverse (42) est disposée sur un cercle primitif de référence de l'engrenage à rotation inverse (42).

4. Dispositif d'agitation (1) selon la revendication 1 ou 2, dans lequel un axe de connexion entre l'élément à rotation normale (22) et la bielle (10) et le deuxième axe de rotation (E) sont prévus sur des côtés opposés par rapport au premier axe de rotation (C).

5. Dispositif d'agitation (1) selon la revendication 1 ou 2, dans lequel le contrepoids (44) est disposé plus près de l'axe de mouvement alternatif (A) que l'engrenage à rotation inverse (42).

6. Dispositif d'agitation (1) selon la revendication 1 ou 2, dans lequel, lorsque la partie à mouvement alternatif (2) est en position avant, le centre de gravité de la partie à rotation inverse (52) comprenant le contrepoids (44) et l'engrenage à rotation inverse (42) est positionné dans une position arrière, et lorsque la partie à mouvement alternatif (2) est en position arrière, le centre de gravité de la partie à rotation inverse (52) comprenant le contrepoids (44) et l'engrenage à rotation inverse (42) est positionné dans une position avant.
